# EUROPEAN PATENT SPECIFICATION

(11) **EP 1 135 238 B1**
(45) Date of publication and mention of the grant of the patent: **12.10.2005**
(21) Application number: 99963794.5
(22) Date of filing: 02.12.1999
(51) Int. Cl.: B25J 18/02, F16B 7/10

(54) **INDUSTRIAL ROBOT ACCORDING TO THE DELTA CONCEPT WITH A ROTATABLE TELESCOPIC AXLE**
INDUSTRIEROBOTER NACH DEM DELTA-KONZEPT MIT EINER DREHBAREN TELESKOPAXE
ROBOT INDUSTRIEL SELON LE CONCEPT DELTA AVEC UN AXE TELESCOPIQUE ROTATIF

(30) Priority: 03.12.1998 SE 9804214
(43) Date of publication of application: 26.09.2001
(73) Proprietor: ABB AB, 721 83 Västeras (SE)
(72) Inventor: PERSSON, Fredrik, S-723 38 Väster s (SE); HVITTFELDT, H kan, S-722 23 Väster s (SE); LARSSON, Jan, S-724 78 Väster s (SE); MIKAELSSON, Pierre, S-723 36 Väster s (SE)
(74) Representative: Onn, Thorsten
(86) International application number: PCT/SE1999/002254
(87) International publication number: WO 2000/035640

(56) References cited:
- US-A- 4 428 710
- US-A- 4 976 582
- US-A- 5 125 789
- US-A- 5 249 881
- US-A- 5 562 393

## Description

### TECHNICAL FIELD

The present invention relates to an industrial robot according to the delta concept with an arm system, as defined in the preamble of claim 1. The present invention also relates to a method for manufacturing an industrial robot according to the delta concept with an arm system intended to rotate in space, as defined in the preamble of claim 10, as well as to the use of such robot.

Such an industrial robot that comprises a telescopic axle, and a corresponding method of manfacturing, are previously known from US-A-4,976,582.

### BACKGROUND

The use of industrial robots for the flexible automation of industrial processes has become increasingly common for replacing time consuming, monotonous and difficult work. Such work can, for example, be transferring pieces of chocolate or similar objects from a conveyor belt to places in pre-determined locations in, for example, boxes, with high speed and precision where the object is moving on a separate conveyor belt. The ability to be able to handle small and delicate objects effectively with great speed and precision is much sought after in the automation of industrial processes. For this purpose, and for others, an industrial robot has been designed according to the so-called delta concept, where the objective is to achieve rotation of lifted objects to a parallel robot structure. This type of robot, a so-called delta robot, can, for example, be placed in a frame construction above a conveyor belt, and have an arm system to which tools intended to rotate in space, i.e. rotate with three degrees of freedom in x, y and z directions, can be attached. By rotating the robot arm as mentioned later below, it is intended that the robot arm also performs a rotational movement. The arm system commonly comprises a base section, a moveable plate and, between them, several jointed pull rods. It is primarily the pull rods that take up the load. A telescopic axle, also called a fourth axle, is arranged between the base section and the moveable plate. Its task is to act as a driving axle from a motor in the robot structure to a tool arranged on the moveable plate. The rotation should have minimal loose play and be able to be carried out in free space, i.e. the distance from the moveable plate to the base of the robot, the base section, is variable. The linear movement can have a speed up to 10 m/s. The number of "pick-ups" of objects can be 120 pieces per minute, which is equivalent to 2 per second. In addition, this delta robot is usually equipped with a system that visually identifies defective objects and only selects those that are perfect.

One problem with this robot is that friction and loose play arises between the integral parts during the rotational movement of the arm system. The telescopic axle must respectively decrease or increase its length at the same time as it is to transfer relatively large moments with great precision, high speed/acceleration, irrespective of whether the object to be picked up is placed at random on the conveyor belt or whether its position is controlled. With known telescopic arms for industrial robots according to the delta concept, an outer tube is joined to an inner axle with an ordinary sliding joint, for example, in the form of splines or similar means, which leads to loose play in the transfer of moments and that is not able to handle moments greater than about 0.5 Nm at moderate speeds.

### DISCLOSURE OF THE INVENTION

The present invention aims to achieve a device for an industrial robot that is more effective and faster than conventional designs. The objective of the invention is, for a telescopic arm, allow a low friction moment-transferring movement that is free of loose play and that is parallel. One goal of the present invention is thus to be able to perform a rotational movement in space with minimal friction, without loose play and with maximum rigidity with an arm system for an industrial robot. The rotational movement should be able to be performed at high speeds and acceleration and with relatively large moments.

The solution is achieved by an industrial robot with the characteristics stated in claim 1. More specifically, claim 1 according to the present invention relates to an industrial robot according to the delta concept with an arm system intended to rotate in space and that comprises a base section, a moveable plate, several multi-jointed pull rods and a telescopic axle arranged between the base section and the moveable plate, where opposite ends of the pull rods and the telescopic axle are connected with the base section and the moveable plate respectively, and where the telescopic axle comprises an inner axle and an outer tube arranged on the inner axle and displaceable relatively to the inner axle in a longitudinal direction, where a torsional rigid bushing is arranged in a stationary manner on the outer tube in which the inner axle is mounted to be displaceable.

One advantage with this solution is that a very torsional rigid design is achieved where a telescopic axle with a low friction moment-transferring movement that is free of loose play and parallel is obtained. The design can handle large moments in excess of 1 Nm and linear speeds of up to 10 m/s. A further advantage is that friction and loose play are minimised, whereby the robot can perform rotational movements with high speed and great precision.

A preferred embodiment includes a guiding device for a telescopic axle with the characteristics stated in claim 6. The inner axle usually has a free axle end that is not fixed. When the telescopic axle decreases/increases in length, the inner axle moves parallel with the outer tube. There is then a risk that the inner axle will come into contact with the inside of the outer tube, which causes wear and dissonance. A further disadvantage is that a loading, a breaking force, occurs on the said torosional rigid bushing in that the inner axle tilts around the bushing. This problem is solved according to the present invention with an industrial robot with the characteristics stated in claim 6. One advantage with this solution is that a telescopic axle is achieved that eliminates problems of wear and dissonance, at the same time as a very torsional rigid design with reduced friction and loose play is achieved. Due to the solution with the guiding device, the parts of the telescopic arm, the inner axle and the outer tube, move parallel in relation to one another. The inner axle is prevented from tilting and causing a breaking force on the bushing.

The torosional rigid bushing can, for example, be joined to the inner axle. In this situation, it is appropriate that balls or similar means be arranged within the bushing, where the balls can be located in grooves in the inner axle. One or more balls can, in this case, be arranged in each respective groove. The bushing is preferably a moment ball-bushing. The bushing and guiding device respectively can be designed in material suitable for the purpose such as thin steel plate, aluminium or plastic. In order for the guiding device to able to handle the wear that occurs, it is appropriate to mould it from a polymer such as POM, PE or PA.

The guiding device can be designed as a disc, several shoulders, an annular sleeve or similar. According to one embodiment, the guiding device is disc-shaped and provided with through cavities in the thickness direction of the disc to allow air to pass through.

The present invention also comprises a method according to claim 10 for manufacturing an industrial robot according to the delta concept with an arm system intended to rotate in space, whereby in the arm system a base section and a moveable plate are arranged, several multi-jointed pull rods and a telescopic axle are arranged between the base section and the moveable plate, where opposite ends of the pull rods and the telescopic axle are connected with the base section and the moveable plate respectively, and where the telescopic axle comprises an inner axle and an outer tube arranged on the inner axle and displaceable relatively to the inner axle in a longitudinal direction wherein a torsional rigid bushing is arranged in a stationary manner on the outer tube in which the inner axle is mounted to be displaceable.

Preferably, the method additionally comprises firmly attaching a guiding device to the inner axle, whereby one part of the said guiding device is arranged to abut the inside of the outer tube.

The present invention also includes use of the said industrial robot, according to claim 12.

The described industrial robot, that can also be termed manipulator with controlling apparatus, is according to the present invention intended to be able to handle loads of up to at least 1 kg.

### DESCRIPTION OF THE DRAWINGS

The invention is described in greater detail in the form of a non-limiting example of an embodiment according to the present invention and clarified with the aid of the enclosed drawings, where
**Fig. 1** shows a perspective view of an industrial robot according to the delta concept.
**Fig. 2** shows a telescopic axle for an industrial robot.
**Fig. 3** shows a torsional rigid bushing arranged on a telescopic axle in a partly sectioned perspective view.
**Fig. 4** shows a guiding device arranged on a telescopic axle in a partly sectioned perspective view.
**Fig. 5** shows a guiding device in a perspective view.

### DESCRIPTION OF EMBODIMENTS

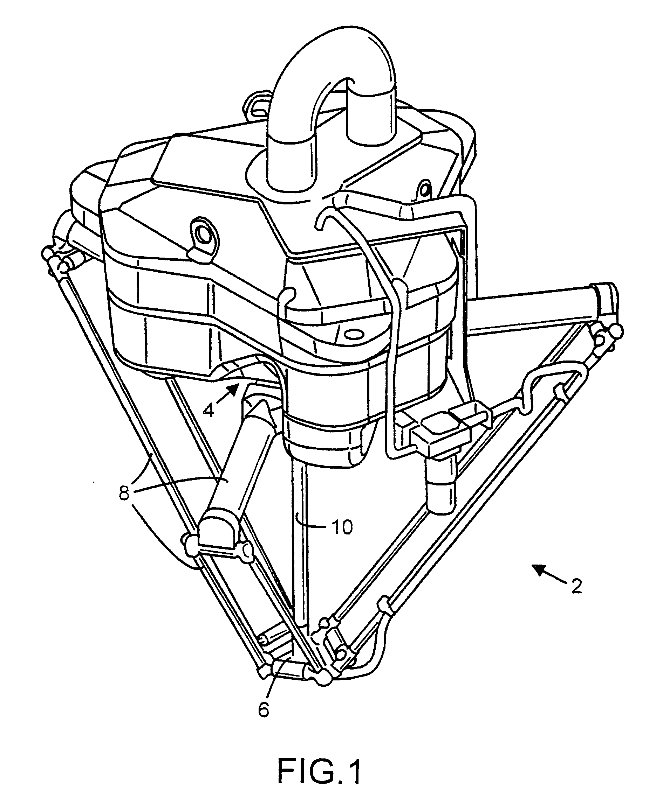

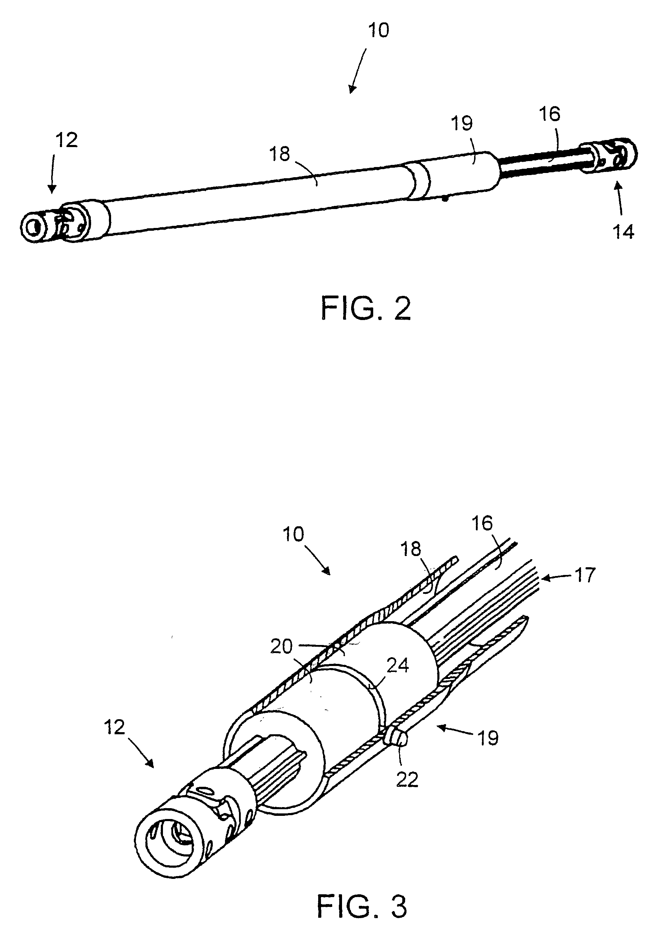

Fig. 1 shows an industrial robot according to the delta concept. The industrial robot is designed with an arm system 2 intended to rotate in the space. A number of jointed pull rods 8 are arranged on a moveable plate 6 at their end sections. The jointed pull rods are arranged to a generally designated base section 4 of the robot at their opposite end sections. A tool is intended to be arranged on the moveable plate 6. A fourth axle in the form of a telescopic axle 10 is arranged between the base section and the moveable plate where the opposite ends of the telescopic axle 12, 14 (see Fig. 2) and the respective pull rods 8 are connected with the base section and the moveable plate respectively. The task of the telescopic axle is to act as a driving axle from a motor in the robot structure to a tool arranged on the moveable plate. At one end, the telescopic axle is arranged in a stationary manner on base section 4 and at its other end is able to move freely when it is arranged at moveable plate 6. The whole of the telescopic axle can move forwards and backwards at very high speeds. The rotation takes place in the space, i.e. the distance from moveable plate 6 to base section 4 is variable.

Fig. 2 shows a view of a telescopic axle 10 that comprises an inner axle 16 with an end section 14 and an outer tube 18 with an end section 12 arranged on the inner axle and displaceable in a longitudinal direction. Outer tube 18 is designed with a thicker, sleeve-shaped section 19 that surrounds a torosional rigid bushing 20 (see Fig. 3) arranged at inner axle 16. Thus, in a stationary manner in outer tube 18 is a torsional rigid bushing 20 arranged, in which the inner axle is displaceable. According to one embodiment, outer tube 18 with end section 12 can be arranged on moveable plate 6 (see Fig. 1) and inner axle 16 with end section 14 can be arranged on base section 4 of the robot.

In the illustration according to Fig. 3, it is evident that a telescopic axle 10 with a torsional rigid bushing 20 is firmly attached to outer tube 18 and surrounds inner axle 16. The torsional rigid bushing can, for example, be mounted to the inner axle, whereby balls or the similar are placed in grooves 17 on the inner axle and arranged within the bushing. Grooves 17 also act to guide the bushing during the displacement of inner axle 16 in the bushing. As shown in the figure, the bushing can be an annular-shaped sleeve. On this, a lubrication nipple 22 is arranged, and at the location of lubrication nipple 22, the bushing can suitably be cut through down to the inner axle with a slit 24 intended to accommodate excess lubricant for continuous lubrication of the inner axle during movement relative to the bushing.

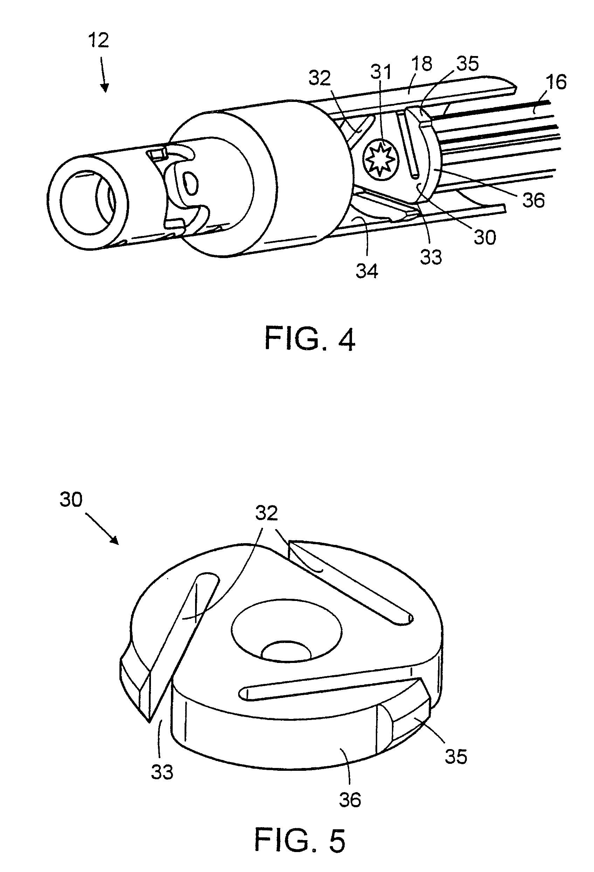

Fig. 4 illustrates a partially sectioned view of a guiding device 30 arranged on inner axle 16, preferably firmly attached to free end 31 of in the inner axle at a telescopic axle 10 (see Figs. 1-2). As is also evident from Fig. 5, guiding device 30 can also be disc-shaped and be designed with through cavities 32 in the thickness direction of the disc to reduce air resistance, where cavities 32 in a radial direction can suitably be through channels that extend outwards and that are open at the periphery 33 of the guiding device, which allows the guiding device to be resilient against the outer tube when the guiding device is arranged to be pre-tensioned against the outer tube. The guiding device can be designed with several cavities 32. One section of the said guiding device is arranged to abut the inside or inner wall 34 of the inner tube. The guiding device can suitably be provided with shoulders 35 with bevelled edges intended to abut the inside 34 of the inner tube, and recess sections 36, to minimise the risk of skewing due to friction. Shoulders 35 can, for example, comprise three or four shoulders evenly spaced around the periphery of the guiding device. The guiding device is preferably arranged centrally within the outer tube. In addition, it is appropriate to arrange the guiding device pre-tensioned within the outer tube, which means that the diameter of the guiding device is somewhat greater than the inner diameter of the outer tube so that the guiding device presses against the inside 34 of the outer tube.

## Claims

1. Industrial robot according to the delta concept with an arm system (2) intended to rotate in space, comprising a base section (4), a moveable plate (6), several multi-jointed pull rods (8) and a telescopic axle (10) arranged between the base section and the moveable plate, where opposite ends (12, 14) of the pull rods and the telescopic axle are connected with the base section and the moveable plate respectively, and where the telescopic axle comprises an inner axle (16) and an outer tube (18) arranged on the inner axle and displaceable relatively to the inner axle in a longitudinal direction, **characterised in that** a torsional rigid bushing (20) is arranged in a stationary manner on the outer tube (18) in which the inner axle (16) is mounted to be displaceable.

2. Industrial robot according to claim 1, **characterised in that** the torsional rigid bushing (20) is a moment ball-bushing.

3. Industrial robot according to claim 1 or 2, **characterised in that** the bushing is cut through with a slit (24).

4. Industrial robot according to any of the previous claims, **characterised in that** inner axle (16) is provided with grooves (17) that guide the inner axle (16) during displacement in bushing (20).

5. Industrial robot according to any of the previous claims, **characterised in that** outer tube (18) is arranged to moveable plate (6) and that inner axle (16) is arranged to base section (4).

6. Industrial robot according to any of the previous claims comprising a guiding device (30) firmly attached on the inner axle, whereby part of the said guiding device is arranged to abut the inside (34) of the outer tube.

7. Industrial robot according to claim 6, **characterised in that** the guiding device is arranged pre-tensioned against the inside of outer tube (18).

8. Industrial robot according to any of claims 6 or 7, **characterised in that** the guiding device is disc-shaped.

9. Industrial robot according to any of claims 6-8, **characterised in that** the guiding device comprises three or more shoulders that abut the inside (34) of the outer tube and which are evenly spaced around the periphery of the guiding device.

10. Method for manufacturing an industrial robot according to the delta concept with an arm system (2) intended to rotate in space, whereby in the arm system (2) a base section (4) and a moveable plate (6) are arranged, several multi-jointed pull rods (8) and a telescopic axle (10) are arranged between the base section and the moveable plate, where opposite ends (12, 14) of the pull rods and the telescopic axle are connected with the base section and the moveable plate respectively, and where the telescopic axle comprises an inner axle (16) and an outer tube (18) arranged on the inner axle and displaceable relatively to the inner axle in a longitudinal direction, **characterised in that** a torsional rigid bushing (20) is arranged in a stationary manner on the outer tube (18) in which the inner axle (16) is mounted to be displaceable.

11. Method for manufacturing an industrial robot according to claim 10, in which a guiding device (30) is firmly attached on the inner axle (16), whereby part of the side guiding device is arranged to abut the inside (34) of the outer tube.

12. Use of an industrial robot having a torosional rigid bushing (20) according to any of claims 1-9, for handling objects, the industrial robot being according to the delta concept with an arm system (2) and a telescopic axle (10) intended to rotate in space.

## Patentansprüche

1. Industrieroboter nach dem Delta-Konzept mit einem im Raum drehbaren Armsystem (2), mit einer Basispartie (4), einer beweglichen Platte (6), mehreren mehrgelenkigen Zugstangen (8) und einer zwischen der Basispartie und der beweglichen Platte angeordneten Teleskopachse (10), wobei gegenüberliegende Enden (12, 14) der Zugstangen und der Teleskopachse jeweils mit der Basispartie bzw. mit der beweglichen Platte verbunden sind und die Teleskopachse eine innere Achse (16) und ein um die innere Achse angeordnetes und gegenüber der inneren Achse längsverschiebliches Aussenrohr (18) aufweist, **dadurch gekennzeichnet, dass** auf dem Aussenrohr (18) eine drehsteife Hülse (20) ortsfest angeordnet ist, in welcher die innere Achse (16) verschiebbar montiert ist.

2. Industrieroboter nach Anspruch 1, **dadurch gekennzeichnet, dass** die drehsteife Hülse (20) eine Drehmoment-Kugelhülse ist.

3. Industrieroboter nach Anspruch 1 oder 2, **dadurch gekennzeichnet, dass** die Hülse einen durchgehenden Schlitz (24) aufweist.

4. Industrieroboter nach einem der vorangehenden Ansprüche, **dadurch gekennzeichnet, dass** die innere Achse (16) Nuten (17) aufweist, welche die innere Achse (16) während der Verschiebung in der Hülse (20) führen.

5. Industrieroboter nach einem der vorangehenden Ansprüche, **dadurch gekennzeichnet, dass** das Aussenrohr (18) mit der beweglichen Platte (6) und die innere Achse (16) mit der Basispartie (4) verbunden ist.

6. Industrieroboter nach einem der vorangehenden Ansprüche, mit einer fest mit der inneren Achse verbundenen Führungsvorrichtung (30), wobei ein Teil der genannten Führungsvorrichtung an der Innenseite (34) des Aussenrohrs anliegt.

7. Industrieroboter nach Anspruch 6, **dadurch gekennzeichnet, dass** die Führungsvorrichtung gegenüber der Innenseite des Aussenrohrs (18) vorgespannt ist.

8. Industrieroboter nach einem der Ansprüche 6 oder 7, **dadurch gekennzeichnet, dass** die Führungsvorrichtung scheibenförmig ist.

9. Industrieroboter nach einem der Ansprüche 6-8, **dadurch gekennzeichnet, dass** die Führungsvorrichtung drei oder mehr Schultern aufweist, die an der Innenseite (34) des Aussenrohrs anliegen und in regelmässigen Abständen auf dem Umfang der Führungsvorrichtung verteilt sind.

10. Verfahren zur Herstellung eines Industrieroboters nach dem Delta-Konzept mit einem im Raum drehbaren Armsystem (2), wobei im Armsystem (2) eine Basispartie (4) und eine bewegliche Platte (6) und zwischen der Basispartie und der beweglichen Platte mehrere mehrgelenkige Zugstangen (8) und eine Teleskopachse (10) angeordnet sind, wobei gegenüberliegende Enden (12, 14) der Zugstangen und der Teleskopachse jeweils mit der Basispartie bzw. mit der beweglichen Platte verbunden sind und die Teleskopachse eine innere Achse (16) und ein um die innere Achse angeordnetes und gegenüber der inneren Achse längsverschiebliches Aussenrohr (18) aufweist, **dadurch gekennzeichnet, dass** auf dem Aussenrohr (18) eine drehsteife Hülse (20) ortsfest angeordnet ist, in welcher die innere Achse (16) verschiebbar montiert ist.

11. Verfahren zur Herstellung eines Industrieroboters nach Anspruch 10, bei welchem eine Führungsvorrichtung (30) fest mit der inneren Achse (16) verbunden ist, wobei ein Teil der genannten Führungsvorrichtung an der Innenseite (34) des Aussenrohrs anliegt.

12. Verwendung eines Industrieroboters mit einer drehsteifen Hülse (20) nach einem der Ansprüche 1-9 zur Handhabung von Gegenständen, wobei es sich um einen Industrieroboter nach dem Delta-Konzept mit einem Armsystem (2) und einer Teleskopachse (10) handelt, die räumlich drehbar sind.

## Revendications

1. Robot industriel selon le concept delta avec un système à bras (2) rotatif dans l'espace, comprenant une section de base (4), une plaque mobile (6), plusieurs tiges de traction (8) à articulations multiples et un axe télescopique (10) agencé entre la section de base et la plaque mobile, où des extrémités opposées (12. 14) des tiges de traction et de l'axe télescopique sont reliées à la section de base et à la plaque mobile, respectivement, et où l'axe télescopique comprend un axe intérieur (16) et un tube extérieur (18) agencé sur l'axe intérieur et déplaçable par rapport à l'axe intérieur dans une direction longitudinale, **caractérisé en ce qu'**une douille (20) rigide en torsion est agencée de manière stationnaire sur le tube extérieur (18) dans lequel l'axe intérieur (16) est monté de manière déplaçable.

2. Robot industriel selon la revendication 1, **caractérisé en ce que** la douille (20) rigide en torsion est une douille à billes à couple.

3. Robot industriel selon la revendication 1 ou 2, **caractérisé en ce que** la douille présente une fente traversante (24).

4. Robot industriel selon l'une quelconque des revendications précédentes, **caractérisé en ce que** l'axe intérieur (16) est muni de rainures (17) guidant l'axe intérieur (16) pendant son déplacement dans la douille (20).

5. Robot industriel selon l'une quelconque des revendications précédentes, **caractérisé en ce que** le tube extérieur (18) est relié à la plaque mobile (6) et que l'axe intérieur (16) est relié à la section de base (4).

6. Robot industriel selon l'une quelconque des revendications précédentes, comprenant un dispositif de guidage (30) fixé à l'axe intérieur, une partie dudit dispositif de guidage venant s'appuyer sur l'intérieur (34) du tube extérieur.

7. Robot industriel selon la revendication 6, **caractérisé en ce que** le dispositif de guidage est agencé avec prétension contre l'intérieur du tube extérieur (18).

8. Robot industriel selon l'une quelconque des revendications 6 ou 7, **caractérisé en ce que** le dispositif de guidage est en forme de disque.

9. Robot industriel selon l'une quelconque des revendications 6-8, **caractérisé en ce que** le dispositif de guidage comporte trois épaulements ou plus qui s'appuient sur l'intérieur (34) du tube extérieur et qui sont régulièrement espacés autour de la périphérie du dispositif de guidage.

10. Procédé de fabrication d'un robot industriel selon le concept delta avec un système à bras (2) rotatif dans l'espace, où une section de base (4) et une plaque mobile (6) sont agencées dans le système à bras (2) et plusieurs tiges de traction (8) à articulations multiples et un axe télescopique (10) sont agencés entre la section de base et la plaque mobile, où des extrémités opposées (12, 14) des tiges de traction et de l'axe télescopique sont reliées à la section de base et à la plaque mobile, respectivement, et où l'axe télescopique comprend un axe intérieur (16) et un tube extérieur (18) agencé sur l'axe intérieur et déplaçable par rapport à l'axe intérieur dans une direction longitudinale, **caractérisé en ce qu'**une douille (20) rigide en torsion est agencée de manière stationnaire sur le tube extérieur (18) dans lequel l'axe intérieur (16) est monté de manière déplaçable.

11. Procédé de fabrication d'un robot industriel selon la revendication 10, dans lequel un dispositif de guidage (30) est fixé à l'axe intérieur (16), une partie dudit dispositif de guidage venant s'appuyer sur l'intérieur (34) du tube extérieur.

12. Utilisation d'un robot industriel ayant une douille (20) rigide en torsion selon l'une quelconque des revendications 1-9 pour la manipulation d'objets, le robot industriel étant réalisé selon le concept delta avec un système à bras (2) et un axe télescopique (10) rotatifs dans l'espace.
